# EUROPÄISCHE PATENTANMELDUNG

(11) **EP 2 290 568 A1**
(43) Veröffentlichungstag der Anmeldung: **02.03.2011**
(21) Anmeldenummer: 09014125.0
(22) Anmeldetag: 11.11.2009
(51) Int. Cl.: G06F 17/50

(54) **Verfahren zur Platzierung von Thermoelektrischen Generatoren in technischen Anlagen**

(30) Priorität: 31.08.2009 EP 09011178
(71) Anmelder: SIEMENS AKTIENGESELLSCHAFT, 80333 München (DE)
(72) Erfinder: Böhm, Birthe, 90491 Nürnberg (DE); Dürr, Matthias, 90473 Nürnberg (DE); Tetzner, Thilo, 90491 Nürnberg (DE)

(57) **Zusammenfassung**

Verfahren zur Platzierung von thermoelektrischen Generatoren in technischen Anlagen

Verfahren und System zur Platzierung von thermoelektrischen Generatoren in technischen Anlagen, wobei ein Anlagenmodell aus interagierenden mechatronischen Objekten, umfassend typspezifische und anlagenspezifische thermodynamische Vor- und Nachbedingungen, erstellt wird und basierend auf einer jeweiligen Thermoenergiedifferenz zwischen den mechatronischen Objekten mögliche Einsatzorte für thermoelektrische Generatoren in der Anlage bestimmt werden.

## Beschreibung

Die Erfindung betrifft ein Verfahren und ein Engineeringsystem zur Platzierung von thermoelektrischen Generatoren in technischen Anlagen. Ferner betrifft die Erfindung ein Computerprogramm-Produkt und ein computerlesbares Medium zur Durchführung des Verfahrens.

Bei thermoelektrischen Generatoren wird die Tatsache ausgenutzt, dass bei Temperaturgefällen zwischen zwei elektrischen Leitern eine elektrische Spannung auftritt, die zur Energiegewinnung verwendet werden kann.

Thermoelektrische Generatoren werden seit längerer Zeit in der Raumfahrt und Messtechnik verwendet und seit einiger Zeit versuchsweise auch in der Automobiltechnik.

In der Automatisierung fertigungstechnischer (z.B. Produktionsanlagen oder Montagestraßen) oder prozesstechnischer Anlagen (z.B. Raffinerien oder Brauereien) ist neben der Kommunikationsanbindung der verwendeten Steuerungsgeräte (z.B. Speicherprogrammierbare Steuerungen, Automatisierungssysteme) oder Feldgeräte (z.B. Aktoren, Sensoren) auch die Energieversorgung für diese Geräte ein wichtiger Aspekt, der im Rahmen des Anlagenengineering berücksichtigt werden muss. Bei der Energieversorgung solcher Anlagen müssen die Ausfallsicherheit, die elektrische Sicherheit, die Belegung von Kabeltrassen, die benötigte Isolation sowie gesetzliche Vorschriften u.a. beachtet werden.

Aufgrund dieser hohen Anforderungen bezüglich der elektrischen Energieversorgung wird in technischen Anlagen eine konventionelle Energieversorgung bevorzugt verwendet, z.B. durch einen externen Energielieferanten und Inhouse-Notstromaggregate.

Die Aufgabe der vorliegenden Erfindung ist es, ein effizientes und sicheres Verfahren zur Platzierung und zur Verwendung von thermoelektrischen Generatoren in technischen Anlagen bereitzustellen.

Die Aufgabe wird mit einem Verfahren, das folgende Schritte umfasst, gelöst:
a) Darstellen der technischen Anlage als Anlagenmodell, bestehend aus interagierenden mechatronischen Objekten, im Rahmen eines Anlagenengineering, wobei
   ein mechatronisches Objekt typspezifische thermodynamische Vor- und Nachbedingungen enthält;
b) Ergänzen der mechatronischen Objekte um anlagenspezifische thermodynamische Bedingungen;
c) Bestimmen von Energieketten aus dem Anlagenengineering, wobei die Energieketten aus hintereinandergeschalteten mechatronischen Objekten bestehen;
d) Bestimmen der Energiebilanz für jedes mechatronische Objekt der Energiekette; und
e) Überprüfung der Energiebilanz der mechatronischen Objekte einer Energiekette auf Erfüllung von notwendigen thermodynamischen Bedingungen zum Einsatz von thermoelektrischen Generatoren. Ein flächendeckender Einsatz von thermoelektrischen Generatoren war bisher in Industrieanlagen aufgrund des damit verbundenen hohen Aufwands für eine Modellierung (z.B. wegen der Komplexität der zu berücksichtigenden Parameter) bzw. wegen Einschränkungen des Einsatzes (z.B. ausreichende Verfügbarkeit einer Energiequelle und Validierung der Verfügbarkeit) nicht möglich. Das vorliegende Engineeringprinzip, basiert auf dem Konzept der "Mechatronischen Objekte", die für die Modellierung des Einsatzes und der Verteilung von thermoelektrischen Generatoren in Industrieanlagen verwendet werden. Mechatronische Objekte ermöglichen die Bereitstellung aller wesentlichen Aspekte einer Anlage in integrierter Form und das bereits in den frühen Phasen der Projektabwicklung einer Anlage. Damit ist die Chance gegeben, der Komplexität des Einsatzes thermoelektrischer Generatoren in industriellen Anwendungen in effizienter Weise zu begegnen.

Eine erste vorteilhafte Ausgestaltung der Erfindung liegt darin, dass das Verfahren weiter folgenden Schritt umfasst:
e) automatisches Darstellen von Einsatzorten mit genügend Energiepotenzial für thermoelektrische Generatoren im Anlagenmodell durch geeignete Ausgabemittel. Durch das automatische Darstellen (z.B. durch eine Farbkodierung) von möglichen Einsatzorten von thermoelektrischen Generatoren in einem Anlagenplan (z.B. auf einer Ausgabevorrichtung (z.B. Drucker, Bildschirm)) eines Engineeringsystems wird ein Benutzer darauf hingewiesen, an welchen Stellen der Anlage ein thermoelektrischer Generator prinzipiell einsetzbar ist.

Eine weitere vorteilhafte Ausgestaltung der Erfindung liegt darin, dass das Verfahren folgenden Schritt weiter umfasst:
f) Modellieren des thermoelektrischen Generators als mechatronisches Objekt und integrieren dieses mechatronischen Objektes im Anlagenmodell. Die Gestaltung von thermoelektrischen Generatoren als mechatronische Objekte und ihre Integration in das Anlagenmodell, bestehend aus mechatronischen Objekten, stellt sicher, dass kein Methoden- und Medienbruch im Anlagenengineering erfolgt.

Eine weitere vorteilhafte Ausgestaltung der Erfindung liegt darin, dass beim automatischen Darstellen der Einsatzorte für thermoelektrische Generatoren folgende Bedingungen berücksichtigt werden: die Ausfallsicherheit der verwendeten Energiequelle und/oder die Materialunverträglichkeit und/oder die Anlagentopologie und/oder die räumlichen Bedingungen und/oder das zeitliche Verhalten und/oder Normen und/oder Richtlinien und/oder Wartbarkeit und/oder physikalische Eigenschaften des thermoelektrischen Generators. Durch die Berücksichtigung dieser Bedingungen fließen bei der Bestimmung des Einsatzortes von thermoelektrischen Generatoren auch wirtschaftliche Kriterien mit ein. Die Aufzählung der Bedingungen ist nicht abschließend, es ist auch mögliche weitere Bedingungen zu definieren.

Eine weitere vorteilhafte Ausgestaltung der Erfindung liegt darin, dass das Verfahren weiterhin folgende Schritte umfasst:
g) Berechnen der für den als mechatronisches Objekt modellierten thermoelektrischen Generator zur Verfügung stehenden Energie in der Energieerzeugerkette; und
h) dediziertes Zuführen von Energie in die Energieerzeugerkette durch im Anlagenmodell modellierte Energiequellen, wenn die, für den als mechatronisches Objekt modellierten thermoelektrischen Generator, zur Verfügung stehende Energie nicht ausreicht. Falls keine oder nicht ausreichend thermische Energie für bereits eingeplante bzw. platzierte thermoelektrische Generatoren verfügbar ist, kann durch die Zuführung von zusätzlicher Energie in den Anlagenprozess und durch Bereitstellung dieser Energie an bestimmten Anlagenorten erreicht werden, diese Anlagenorte für thermoelektrische Generatoren nutzbar zu machen. Eine Anlage kann somit auf einfache und gezielte Weise für den Einsatz von thermoelektrischen Generatoren ertüchtigt werden.

Eine weitere vorteilhafte Ausgestaltung der Erfindung liegt in einem Verfahren zur Ortsbestimmung von thermoelektrischen Generatoren in technischen Anlagen, umfassend die folgenden Schritte:
a) Darstellen der technischen Anlage als Anlagenmodell, bestehend aus interagierenden mechatronischen Objekten, im Rahmen eines Anlagenengineering, wobei
   ein mechatronisches Objekt typspezifische thermodynamische Vor- und Nachbedingungen enthält;
b) Ergänzen der mechatronischen Objekte um anlagenspezifische thermodynamische Bedingungen;
c) Bestimmen des jeweiligen Wärmedifferenzbedarfs für die mechatronischen Objekte;
d) Bestimmen von Energieketten im Anlagenmodell;
e) Modellierung eines thermoelektrischen Generators als mechatronisches Objekt, wobei der Wärmedifferenzbedarf des thermoelektrischen Generators im mechatronischen Objekt hinterlegt ist;
f) Integrieren des als mechatronisches Objekt modellierten thermoelektrischen Generators in eine Energiekette des Anlagenmodells;
g) Berechnen der für den als mechatronisches Objekt modellierten thermoelektrischen Generator zur Verfügung stehenden Energie in der Energiekette; und
h) dediziertes Zuführen von Energie in die Energiekette durch im Anlagenmodell modellierte Energiequellen, wenn die, für den als mechatronisches Objekt modellierten thermoelektrischen Generator, zur Verfügung stehende Energie nicht ausreicht. Falls keine oder nicht ausreichend thermische Energie für bereits eingeplante bzw. platzierte thermoelektrische Generatoren verfügbar ist, kann durch die Veränderung von Anlagenparametern die Zuführung von zusätzlicher Energie in den Anlagenprozess erreicht werden, um diese Energie an geeigneter Stelle in der Anlage für thermoelektrische Generatoren zu nutzen. Eine Anlage kann somit auf einfache Weise für den Einsatz von thermoelektrischen Generatoren ertüchtigt werden.

Eine weitere vorteilhafte Ausgestaltung der Erfindung liegt darin, dass bei der Integration des als mechatronisches Objekt modellierten thermoelektrischen Generators im Anlagenmodell folgende Bedingungen berücksichtigt werden: die Ausfallsicherheit der verwendeten Energiequelle und/oder die Materialunverträglichkeit und/oder die Anlagenentopologie und/oder die räumlichen Bedingungen und/oder das zeitliche Verhalten und/oder Normen und/oder Richtlinien und/oder Wartbarkeit und/oder physikalische Eigenschaften des thermoelektrischen Generators. Dadurch werden auch sich ergebende wirtschaftliche und sicherheitsrelevante Kriterien bei der Integration von thermoelektrischen Generatoren im Anlagenmodell berücksichtigt. Das Vorgehen bei der Bestimmung von geeigneten Orten in industriellen Anlagen für den Einsatz von thermoelektrischen Generatoren kann somit skaliert bzw. stufenweise erfolgen. Zuerst werden Orte bestimmt, bei denen die Energiebilanz für den Einsatz von thermoelektrischen Generatoren prinzipiell ausreicht (notwendige Bedingungen), dann werden weitere Anforderungen bzw. Bedingungen untersucht (hinreichende Bedingungen). Dieses stufenweise Vorgehen steigert die Effizienz des Verfahrens und vermeidet Fehlentscheidungen bei der Platzierung von thermoelektrischen Generatoren schon in frühen Phasen des Anlagenengineerings. Die Aufzählung der Bedingungen ist nicht abschließend. Es ist auch möglich, dass weitere Bedingungen definiert werden.

Eine weitere vorteilhafte Ausgestaltung der Erfindung liegt darin, dass ein mechatronisches Objekt eine technische Komponente einer technischen Anlage repräsentiert und Facetten enthält, wobei einer Facette eine Disziplin zugeordnet ist. Der Begriff Mechatronik beschreibt das Zusammenspiel verschiedener Disziplinen wie - je nach Branche und Bedarf - Mechanik, Elektrik, Automatisierung sowie weiterer Informationen zu Aktivitäten, die das Engineering bzw. die Projektabwicklung auf verschiedene Art unterstützen (z.B.: Vertrieb, Kalkulation, Projektleitung etc.). All diese mechatronischen Informationen können auf die zum Einsatz kommenden technischen Komponenten bezogen werden. Dieses Zusammenspiel wird über eine digitale Repräsentation des Objektes beschrieben, das sogenannte Mechatronische Objekt (MO). Ein MO kann dabei verschiedene sogenannte Facetten beinhalten, zum Beispiel eine Facette für jede Disziplin. Die Facetten stellen die Daten einer jeweiligen Disziplin dar. Dadurch werden softwaretechnische Prinzipien, wie z.B. das Lokalitätsprinzip und die Datenkapselung (encapsulation) auf einfache Weise berücksichtigt.

Eine weitere vorteilhafte Ausgestaltung der Erfindung liegt darin, dass folgende Disziplinen zuordenbar sind: Mechanik und/oder Elektrik und/oder Automatisierung und/oder Vertrieb und/oder Kalkulation und/oder Projektleitung und/oder Wartung und/oder Sicherheit und/oder Betriebsführung und/oder Bauingenieurwesen (Civil Engineering) und/oder Engineering. Wie schon erwähnt, beschreiben mechatronische Objekte das Zusammenspiel verschiedener Disziplinen, die das Anlagenengineering oder die Projektabwicklung unterstützen. Durch die Konzentration von jeweils relevanten Aspekten (z.B. Daten, Sichten, Methoden, Attribute, Dokumentation) dieser Disziplinen in den entsprechenden mechatronischen Objekten, sind diese Informationen nicht an beliebigen Stellen einer Anlage verteilt, sondern dort vorhanden, wo sie logisch hingehören. Dies erleichtert z.B. die Sicherstellung der Anlagenkonsistenz. Die Aufzählung der möglichen Disziplinen ist nicht abschließend. Je nach Domäne und Einsatzbereich sind weitere Disziplinen zuordenbar.

Die Aufgabe wird weiterhin gelöst durch ein Engineeringsystem zur Modellierung technischer Anlagen, geeignet zur Durchführung eines der erfindungsgemäßen Verfahren. Beim Engineeringsystem kann es sich um einen handelsüblichen Computer (z.B. PC oder Workstation) handeln, mit entsprechender Software mit Modellierungswerkzeugen (z.B. UML-Arbeitsumgebung) zur Durchführung des Verfahrens. Je nach Anforderungen und Arbeitsumgebung, kann als Computer auch ein entsprechend ausgestatteter Industrie-PC verwendet werden.

Ferner wird die Aufgabe gelöst durch ein Computerprogramm-Produkt oder ein computerlesbares Medium, welche auf einer Programm gesteuerten Einrichtung die Durchführung des Verfahrens veranlassen. Dies erleichtert die Flexibilität des Einsatzes und auch die Verteilung und den kommerziellen Vertrieb des erfindungsgemäßen Verfahrens.

Ein Ausführungsbeispiel der Erfindung ist in der Zeichnung dargestellt und wird im Folgenden erläutert.

Dabei zeigen:
- FIG 1: ein beispielhaftes Schemabild einer technischen An- lage,
- FIG 2: eine abstrakte Übersichtsdarstellung eines me- chatronischen Objektes,
- FIG 3a: einen beispielhaften Baum von mechatronischen Ob- jekten,
- FIG 3b: eine Schemadarstellung eines mechatronischen Objek- tes mit Facetten,
- FIG 4: ein Beispiel für eine objektorientierte Repräsenta- tion von mechatronischen Objekten in UML-Notation, und
- FIG 5: eine beispielhafte Einrichtung zur Durchführung des erfindungsgemäßen Verfahrens.

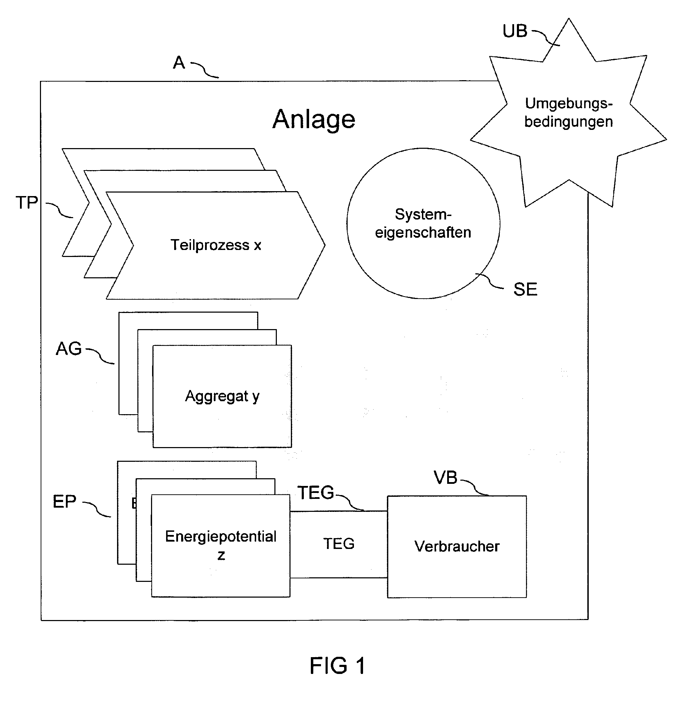

FIG 1 zeigt ein beispielhaftes Schemabild einer technischen Anlage A mit mechanischen und elektrischen Komponenten AG (Aggregate) zur Durchführung von Teilprozessen TP, wie z.B. Zuführen, Montieren, Messen, Mischen. Thermoelektrische Generatoren TEG verwenden Differenzen im Energiepotential EP (z.B. unterschiedliche Temperatur- oder Wärmepotentiale) von Verbrauchern VB zur Energiegewinnung. Bei der Energiegewinnung durch thermoelektrische Generatoren TEG in technischen Anlagen (z.B. Produktionsanlagen, Verfahrenstechnische Anlagen) sind neben der Potentialdifferenz von vor- und nachgeschalteten Verbrauchern die Systemeigenschaften SE und die Umgebungsbedingungen UB einer Anlage A zu berücksichtigen. Zu den Systemeigenschaften SE zählen u.a. die Anlagentopologie, Anforderungen an Zuverlässigkeit und Sicherheit. Zu den Umgebungsbedingungen UB zählen u.a. der Standort oder die Infrastruktur des Standortes, aber auch Umgebungstemperatur bzw. das Wärmepotential der Umgebung.

Bei der Automatisierung industrieller Anlagen A kommt eine Vielzahl elektronischer Komponenten AG zum Einsatz, die zuverlässig bei wechselnden Umgebungs- UB und Betriebsbedingungen SE mit elektrischer Energie versorgt werden müssen. Aktuell werden verschiedene Ansätze verfolgt mittels neuer oder verbesserter physikalischer Verfahren aus bisher nicht ökonomisch nutzbaren Energiepotentialunterschieden EP elektrische Energie zu gewinnen und insbesondere für Zwecke der dezentralen und / oder kabelfreien Signalverarbeitung zu nutzen. Neben dem ökologischen Aspekt ("Energy Harvesting", "erneuerbare Energiequellen") gibt es auch den Aspekt des effizienten Aufbaus technischer Systeme, bei dem der Fokus auf der Vereinfachung der Systeme durch die Eliminierung ganzer Subsysteme (z.B. zur kabelgebundenen Stromversorgung), liegt.

Ein grundsätzliches Problem stellt dabei der Umstand dar, dass die Korrelation zwischen Verfügbarkeit von Energiepotential und Bedarf der Verbraucher meistens gering ist, d.h. Energie liegt vor, wenn sie nicht gebraucht wird, bzw. Energie wird gebraucht, wenn gerade kein Potential gegeben ist. Ein gängiger Ansatz ist der Einsatz von Energiespeichern, z.B. eines Akkumulators im PKW ("Batterie"). Dieser Ansatz stößt jedoch an Grenzen, z.B. ist eine PKW-Batterie bei Stadtverkehr mit vielen Startvorgängen rasch entleert. Ferner verfügen Energiespeicher häufig über schlechte Wirkungsgrade und unterliegen einer Alterung. Insbesondere bei den Entwicklungen im Umfeld des "Energy Harvesting" wird versucht, diesen Problemen durch "Energy Management" zu begegnen. Dies läuft in der Praxis auf erhebliche Kompromisse bezüglich der Nutzbarkeit hinaus (geringer Durchsatz, sporadische, bzw. unvorhersehbare Verfügbarkeit). Diese Kompromisse stellen erhebliche Einschränkungen bzgl. Nutzbarkeit und Sicherheit gegenüber den heute verwendeten netzgebundenen Geräten dar.

Neben diesem zentralen Problem ergibt sich eine Reihe von weiteren Fragen, die sich aus der Komplexität typischer Industrieanlagen A ergeben. Der konventionelle "diskrete" Engineeringprozess für den Einsatz von thermoelektrischen Generatoren TEG in Industrieanlagen A wird sich typischerweise an einer priorisierten Folge von Detailfragen orientieren, z.B. der Suche nach einer hinreichenden Wärmepotentialdifferenz, deren voraussichtlicher zeitlicher Verfügbarkeit, der Suche nach einer Befestigungsmöglichkeit mit geeigneten Kabelwegen, der Montierbarkeit (Erreichbarkeit, Geometrie, Materialpaarung, Wärmeleitpaste usw.) usw. Eine erhebliche Zahl dieser Entscheidungen wird aufgrund von Abschätzungen getroffen werden müssen, da relevante Informationen nicht oder in ungeeigneter Form vorliegen bzw. die Ermittlung dieser Informationen nur mit hohem Aufwand möglich ist.

Als Fazit lässt sich festhalten:
Der Einsatz thermoelektrischer Generatoren für Zwecke der industriellen Automatisierung basiert bisher in weiten Teilen auf Abschätzungen (bzw. dem "Prinzip Hoffnung") bezüglich der Verfügbarkeit der Energieversorgung und der Einbettung in die Gesamtanlage. Aufgrund der bestehenden Unsicherheit wird insbesondere in kritischen Anlagen der Einsatz thermoelektrischer Generatoren häufig grundsätzlich ausgeschlossen und stattdessen eine konventionelle Energieversorgung gewählt.
Für das Engineering und den Einsatz von thermoelektrischen Generatoren TEG gibt es bisher keine vorbereiteten Lösungen, die sich effizient und sicher in das Gesamtmodell einer industriellen Anlage einbauen lassen. Somit ist jede heute geschaffene Lösung eine Einzellösung mit wenigen Möglichkeiten für eine Wiederverwendung und dem sich daraus ergebenden Potential.

Grundsätzlich wurden bisher für den Einsatz von thermoelektrischen Generatoren TEG in technischen Anlagen A die folgenden Lösungswege gewählt:
- Beschränkung auf Einsatzzwecke mit geringen Anforderungen an die Verfügbarkeit.
- Aufwendige Modellierung des Einsatzzwecks und explizite Beschaffung zusätzlicher Informationen (Betriebspläne usw.).

Ein flächendeckender Einsatz von thermoelektrischen Generatoren war bisher in Industrieanlagen aufgrund des damit verbundenen hohen Aufwands für eine Modellierung bzw. die starke Begrenzung des Einsatzes und die damit verbundene notwendige Risikoabschätzung nicht zu erwarten. Im Allgemeinen werden bisher konventionelle Energieversorgungslösungen in Industrieanlagen bevorzugt, um im Gegenzug eine einfache Projektierung der Industrieanlage und eine auf bisherigen Erfahrungen basierende Gesamtlösung erstellen zu können. Im Zuge einer Lifecycle-Kosten-Betrachtung der Gesamtlösung ist das nicht optimal.

Zur Lösung des Problems des Einsatzes und der Verteilung von thermoelektrischen Generatoren in Anlagen A ist die Erkenntnis wichtig, dass eine nachträgliche oder zusätzliche Einbindung "ex post" meist aufgrund der Komplexität der Zusammenhänge und des Implementierungsaufwands nicht zielführend ist, bzw. bestenfalls in Sonderfällen zuverlässig funktioniert. Grundsätzlich ist dies im Rahmen einer Modernisierung der Anlage aber ebenfalls möglich.

Die vorliegende Erfindung geht von der Ansicht aus, innovative Engineeringkonzepte, wie z.B. das Konzept der "Mechatronischen Objekte", für die Lösung des Problems der Verteilung von thermoelektrischen Generatoren in industriellen Anlagen A zu nutzen. Mechatronische Objekte ermöglichen die Bereitstellung aller wesentlichen Aspekte einer Anlage in integrierter Form und das bereits in den frühen Phasen der Projektabwicklung einer Anlage A. Damit ist die Chance gegeben, der Komplexität des Einsatzes thermoelektrischer Generatoren in industriellen Anwendungen in effizienter Weise zu begegnen.

Das Problem wird gelöst durch die Gestaltung von Thermoelektrischen Generatoren TEG als Mechatronische Objekte im Rahmen eines Mechatronischen Engineeringsystems.

Die Erfindung basiert auf dem mechatronischen Konzept, das im Wesentlichen auf der Integration verschiedener Disziplinen bzw. Gewerke beruht. Als Konsequenz aus einer tiefen Integration der Informationen unterschiedlicher Disziplinen zu einem Objekt werden in erster Linie eine stark verbesserte Qualität der Lösung, verringerte Engineeringzeiten und Kosten erwartet.

Der Begriff und das Konzept Mechatronik beschreibt das Zusammenspiel verschiedener Disziplinen wie - je nach Branche und Bedarf - Mechanik, Elektrik, Automatisierung, sowie weiterer Informationen zu Aktivitäten, die das Engineering bzw. die Projektabwicklung auf verschiedene Art unterstützen (z.B.: Vertrieb, Kalkulation, Projektleitung etc.). All diese mechatronischen Informationen können auf die zum Einsatz kommenden technischen Komponenten bezogen werden. Dieses Zusammenspiel wird über eine digitale Repräsentation des Objektes beschrieben, das sogenannte Mechatronische Objekt (MO). Ein MO kann dabei verschiedene sogenannte Facetten beinhalten, zum Beispiel eine Facette für jede Disziplin. Die Facetten beinhalten die Daten einer Disziplin, während die MO-Struktur diese Daten aggregiert und verknüpft.

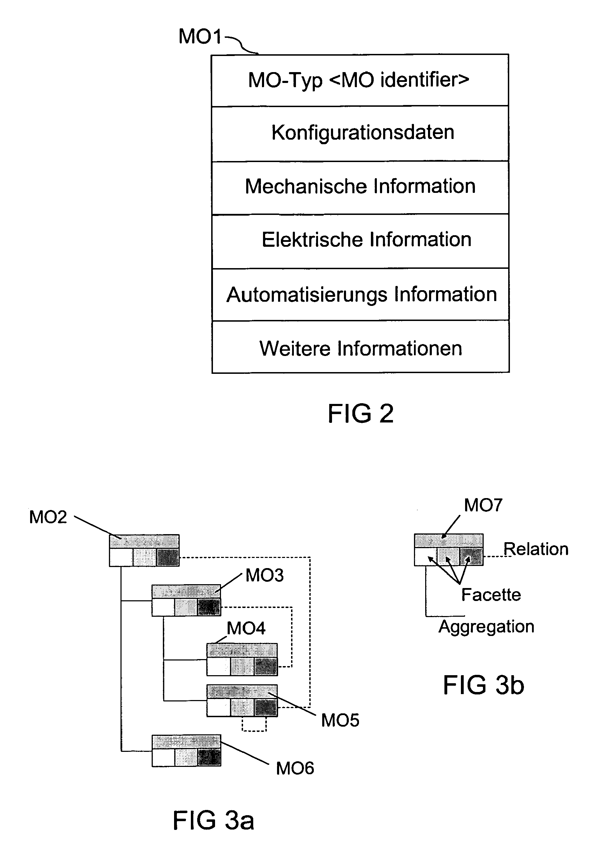

FIG 2 zeigt eine abstrakte Übersichtsdarstellung eines mechatronischen Objektes MO1. Ein mechatronisches Objekt MO1 repräsentiert vorzugsweise eine Komponente der realen Welt, z.B. einer technologischen Domäne. Im Bereich der Verfahrenstechnik können dies z.B. Pumpen, Behälter, Ventile, Rohre, Heizelemente oder Rührer sein. Im Kontext industrieller Steuerungen können dies z.B. Komponenten von Werkzeugmaschinen oder Produktionsmaschinen sein. Die mechatronischen Objekte MO1 stellen eine definierte technologische, abgeschlossene Funktionalität bereit. Sie können untereinander verschaltet werden, um komplexe technologische Aufgaben zu realisieren. Weiterhin kann ein mechatronisches Objekt MO1 als softwaretechnologische Einheit von einem Anwender sehr leicht in unterschiedlichen Applikationen wiederverwendet werden. Ein Anwender kann bei der Nutzung von mechatronischen Objekten MO1 von deren Implementierung abstrahieren. Vom Anwender in seinen Anwenderprogrammen direkt einsetzbare mechatronische Objekte MO1 entstehen durch ihre Instanziierung aus Objekttypen. Aus einem einmal definierten Objekttyp können beliebig viele Instanzen von mechatronischen Objekten gewonnen werden.

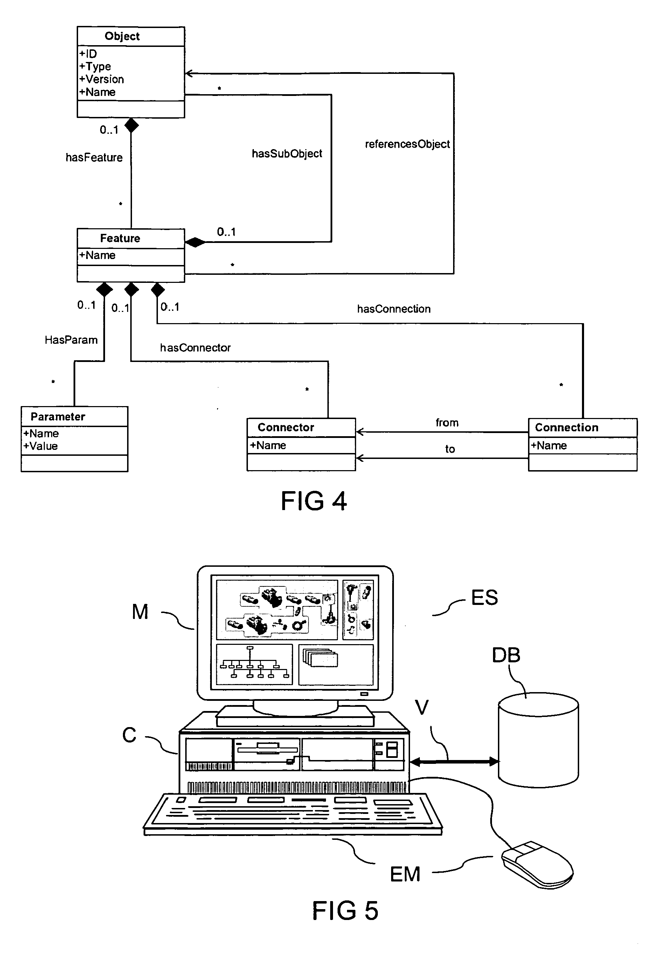

Die Darstellung gemäß FIG 4 zeigt in einer beispielhaften Schemadarstellung die Anwendersicht eines mechatronischen Objektes MO1 d.h. einer Instanz eines Objekttyps.

Der oberste Teil ("Object"), abgetrennt von den folgenden Teilen durch eine durchgezogene Linie, enthält den Typ des zugrunde liegenden mechatronischen Objektes (MO-Type) und den MO-Identifier, d.h. die projekt- bzw. anlageneindeutige Bezeichnung der Instanziierung.

Der nächstfolgende Teil enthält Konfigurationsdaten. Über die Konfigurationsdaten wird das mechatronische Objekt MO1 in seiner grundsätzlichen Wirkungsweise eingestellt. Über die Konfigurationsdaten erfolgt die Parametrierung der mechatronischen Objekte MO1. In der Darstellung gemäß FIG 2 werden die Konfigurationsdaten durch eine Linie von den mechanischen Informationen (z.B. HW, Geräte) abgetrennt.

Der nächste Abschnitt sind die elektrischen Informationen (Elektrik, Stromversorgung etc.).

Der nächste Abschnitt in FIG 2 für ein mechatronisches Objekt MO1 sind die Automatisierungsinformationen (z.B. Programm für eine Speicherprogrammierbare Steuerung). Weitere Informationen für ein mechatronisches Objekt können Alarme, Systemvariablen, aber auch Informationen zu Vertrieb, Kalkulation, Projektmanagement, Wartung oder Dokumentation sein.

FIG 3a zeigt einen beispielhaften Baum von mechatronischen Objekten M02 - M06. Ein mechatronisches Objekten M02 - M06 beschreibt ein Element im Engineering, wie z.B. ein Gerät oder eine Maschine. Wenn ein Gerät oder eine Maschine z.B. in eine Teilanlage oder Fertigungsstraße integriert wird, dann können auch die zugeordneten mechatronischen Objekten M03 - M06 in einem übergeordneten mechatronischen Objekt M02 für die Teilanlage oder Fertigungsstraße aggregiert werden. Dieses Konzept bedingt im Allgemeinen definierte Schnittstellen der mechatronischen Objekte M02 - M06, über die sie miteinander verknüpft werden können, um eine Kapselung von Informationen zu erreichen. Die durchgezogenen Linien in FIG 3a stellen eine Aggregationsrelation zwischen den mechatronischen Objekte M02 - M06 dar. Durch die gestrichelten Linien ist angedeutet, dass weitere Relationen zwischen den mechatronischen Objekten M02 - M06 dargestellt werden können, wie z.B. funktionale Aspekte, bauliche Aspekte, Sicherheitsaspekte (Safety und Security). Durch die Rechtecke in den mechatronischen Objekten M02 - M06 ist angedeutet, dass ein mechatronisches Objekt Facetten enthalten kann.

FIG 3b zeigt eine Schemadarstellung eines mechatronischen Objektes M07 mit Facetten. Ein mechatronisches Objekt M07 beschreibt ein Element im Engineering, wie z.B. ein Gerät oder eine Maschine. Wenn ein Gerät oder eine Maschine z.B. in eine Teilanlage oder Fertigungsstraße integriert wird, dann können auch die zugeordneten mechatronischen Objekte in einem übergeordneten mechatronischen Objekt für die Teilanlage oder Fertigungsstraße aggregiert werden (siehe M02 in FIG 3a). Dieses Konzept bedingt im Allgemeinen definierte Schnittstellen der mechatronischen Objekte M07, über die die mechatronischen Objekte miteinander verknüpft werden können, um eine Kapselung von Informationen zu erreichen

Die in einem mechatronischen Objekt M07 hinterlegten Daten enthalten dann Informationen zu den generellen thermodynamischen Eigenschaften eines mechatronischen Objektes, wie z.B. für ein mechatronisches Objekt "Behälter" die minimale und maximale Temperatur von Flüssigkeiten, die in den Behälter eingeleitet werden dürfen sowie weitere Informationen wie Durchflussmenge, Druck etc. Diese allgemeinen thermodynamischen Informationen werden spezifisch für eine Anlage mit weiteren Daten ergänzt: Relevant ist z.B. auch die tatsächliche Temperatur der Flüssigkeit, die in den Behälter eingeleitet wird und die Temperatur der Flüssigkeit nach der "Bearbeitung" im Behälter. Verallgemeinert sind die thermodynamischen Vor- und Nachbedingungen eines mechatronischen Objektes für das "Energy Harvesting" relevant, spielen aber auch für die "konventionelle" Projektierung einer Industrieanlage eine Rolle, da sie zur Auslegung der Anlage benötigt werden.

Auf Basis der thermodynamischen Daten eines mechatronischen Objektes M07 wird ein entsprechendes Engineeringsystem für einen thermoelektrischen Generator (TEG; FIG 1) verfügbare thermische Energie aus der MO-Struktur (z.B. das Anlagenmodell, basierend auf mechatronischen Objekten) berechnen, die die Anlage vollständig oder teilweise repräsentiert: Ist der Wärmebedarf eines mechatronischen Objektes geringer als der verfügbare Wärmestrom der in der MO-Struktur unmittelbar vorgelagerten mechatronischen Objekte, ermöglicht die Differenz den Einsatz eines thermoelektrischen Generators. Diese Differenz wird als nutzbare Energie durch das Engineeringsystem angezeigt und gibt dem Konstrukteur Hinweise wo der Einsatz von thermoelektrischen Generatoren (TEG; FIG 1) aufgrund von Energiepotentialen möglich ist. Das erfindungsgemäße Verfahren berücksichtigt bei der Auswahl von Orten für die Platzierung von thermoelektrischen Generatoren in einer Anlage Energiequellen (aus dem Prozess), aber auch Energiesenken (z.B. die Umgebung, die prinzipiell auch als mechatronisches Objekt aufgefasst und modelliert werden kann). Wenn z.B. die Temperatur der Umgebung so hoch ist wie die Temperatur der anzuzapfenden Wärmequelle/-senke (Stelle des Anlagenprozesses), dann ist ein thermoelektrischen Generator an dieser Stelle nicht sinnvoll anbringbar.

Die Darstellung für den Konstrukteur kann dann z.B. die Form annehmen, dass Bereiche der Anlage, in denen ein thermoelektrischer Generator mit den gewünschten Eigenschaften einsetzbar ist als "grüne Bereiche" oder "grüne Wolken" visuell in den Planungsdaten markiert werden und angezeigt werden (z.B. auf einem Monitor oder in einem Ausdruck), solche mit Einschränkungen gelb usw.

Der Konstrukteur kann dann aufgrund dieser Vorschläge über den Einsatzort der benötigten thermoelektrischen Generatoren entscheiden und direkt im mechatronischen Engineeringsystem ein mechatronisches Objekt platzieren, das als Stellvertreterobjekt für den thermoelektrischen Generator fungiert und die Daten des thermoelektrischen Generators enthält (z.B. in den Facetten). Die berechneten Daten in Bezug auf die Eignung der unterschiedlichen Einsatzorte werden dem Konstrukteur durch das Engineeringsystem dargestellt, so dass er z.B. auch anhand der Zuverlässigkeit der Energiequelle entscheiden kann.

Alternativ können die Informationen dieses TEG-MO (mechatronisches Objekt, das einen thermoelektrischen Generator repräsentiert) für eine weitere Eingrenzung des Einsatzes des thermoelektrischen Generators verwendet werden. Entweder ist es möglich, bereits instanzierte aber noch nicht platzierte mechatronische Objekte M07 durch den Konstrukteur im Engineeringsystem zu erzeugen, bei denen das Verbraucher-MO zwar bereits definiert sein kann aber das zugehörige Energieerzeuger-MO noch zugeordnet werden muss, oder es kann pauschal nach Einsatzorten für ausgewählte oder alle im Engineeringsystem vorhandenen TEG-Typen gesucht werden (s.o.). Für jeden Typ eines thermoelektrischen Generators ist dabei ein MO-Typ erforderlich, sofern sich der thermoelektrische Generator aufgrund seiner Einsatzmöglichkeiten (und Daten) unterscheidet. Im mechatronischen Objekt oder dem MO-Typ sind dabei Vorbedingungen für den Einsatz der thermoelektrischen Generatoren enthalten. Zum Beispiel kann dies die benötigte Leistung sein, außerdem Materialeigenschaften, Geometrie (inkl. Anschlüsse) des thermoelektrischen Generators etc. (siehe unten).

Für eine vollständige Planung einer Gesamtlösung mit thermoelektrischen Generatoren wird ein TEG-Typ in einem Anlagenprojekt instanziert und als Funktion einem oder mehreren Energieverbraucher-MOs direkt zugeordnet. Aus der Zuordnung zu einem Energieverbraucher-MO ergeben sich weitere Informationen zu den Anforderungen eines thermoelektrischen Generators: z.B. Vorgaben des Energieverbraucher-MOs zur Ausfallsicherheit der Energiequelle, auf deren Basis die Verfügbarkeit des thermoelektrischen Generators bestimmt werden muss.

Nach der Identifikation möglicher Einbauorte auf Basis der verfügbaren Energie - wie oben beschrieben - können zusätzliche Informationen bzgl. eingesetztem Material, Geometrie der mechanischen Konstruktion, zeitlichem Verhalten des Wärmestroms, räumlichen Bedingungen, geltenden Normen und Richtlinien, Wartbarkeit der Lösung etc. von den TEG-MO (thermoelektrischer Generator modelliert als mechatronisches Objekt) sowie Energieerzeuger-MOs genutzt werden, um daraus die tatsächlichen Möglichkeiten der Installation in der geplanten Anlage genauer zu bestimmen.

Beispiele dazu sind:
- Materialunverträglichkeit: Das Material einer Rohrleitung kann für den Anschluss eines TEG ungeeignet sein, da sich die beiden Materialien der Rohrleitung und des TEG-Anschlusses nicht "vertragen" (z.B. aufgrund von Korrosion). In diesem Fall kann kein thermoelektrischer Generator (TEG) angeschlossen werden oder es kann eventuell ein Verbindungsstück vorgesehen werden, für das wiederum genügend Platz in der Umgebung vorhanden sein muss. Gegebenenfalls muss eine Wärmeleitpaste verwendet werden, was Einflüsse auf Service etc. haben kann.
- Geometrie: Ist der Anschluss eines TEG geometrisch möglich? D.h. in Bezug auf Dimensionierung, Gestalt und Rohrkrümmung etc.?
- Räumliche Bedingungen: Bei einer Gesamtbetrachtung der Anlage kann ggf. der zusätzliche Platzbedarf des TEG nicht erfüllt werden. Ein Einbau ist deswegen in Bezug auf ein bestimmtes MO nicht möglich. Oder der Einbau eines TEG kann räumlich nur sehr weit entfernt vom Nutzungsort der erzeugten elektrischen Energie stattfinden (soweit bekannt) - Einsparungen in Bezug auf Verkabelung können damit nicht realisiert werden, stattdessen wird die Kabelführung deutlich aufwendiger und ist nur schwer realisierbar.
- Zeitliches Verhalten: Wie zuverlässig werden die angegebenen thermodynamischen Eigenschaften erreicht? Dies kann sich z.B. aus den vorhandenen Fahrplänen der Anlage ergeben, umgekehrt ergibt sich die durch das TEG benötigte Zuverlässigkeit bzw. das notwendige zeitliche Verhalten aus dem Einsatzort des TEG (thermoelektrischer Generator) oder aus einer Gesamtstrategie für die Anlage. Diese Bedingungen können entweder zentral im Engineeringsystem vorgegeben werden oder es wird zunächst pauschal angenommen, dass eine höhere Verfügbarkeit auch eine höhere Eignung bedeutet und die endgültige Entscheidung wird dem Konstrukteur überlassen.
- Normen und Richtlinien: Die Vorgabe bestimmter Normen und Richtlinien (z.B. FDA) kann den Einsatz eines TEG aus Sicherheitsgründen ausschließen (ganz oder in Anlagenteilbereichen).
- Wartbarkeit: Ist die Wartbarkeit des TEG sichergestellt? Falls der TEG beispielsweise regelmäßig gewartet werden müsste stellt sich die Frage, ob dies aufgrund der räumlichen Gegebenheiten ggf. nur mit sehr hohem Aufwand realisierbar wäre.
- Weitere Einschränkungen sind möglich z.B. aufgrund weiterer physikalischer Eigenschaften des TEG: Kann am angestrebten Ort ein TEG aufgrund des Gewichtes des TEG und der Tragfähigkeit des Energieerzeugers (z.B. Rohr oder Behälter) eingebaut werden?

Das Engineeringsystem kann diese Einschränkungen in die Berechnungen mit einbeziehen und so einige der zunächst als geeignet erscheinenden Einbauorte für ein TEG bereits automatisiert ausschließen. Es bleibt dabei der Ausgestaltung des Engineering-Systems überlassen, in welchem Umfang diese Kriterien bereits automatisiert berücksichtigt werden.

FIG 4 zeigt ein Beispiel für eine objektorientierte Repräsentation von mechatronischen Objekten in UML-Notation. Prinzipiell ist jede objektorientierte Notation verwendbar. Mechatronische Objekte können von einem Benutzer mit Hilfe von Engineeringsystemen oder Softwareentwicklungsumgebungen, die objektorientierte Paradigmen (Klassen, Typen, Vererbung, etc.) unterstützen, entworfen und implementiert werden. Die Rechtecke in FIG 4 stellen die involvierten Objekte bzw. Teilobjekte dar, die Linien mit der entsprechenden Notation die Beziehungen zwischen den Objekten ("has", "from", "is a" usw.).

In einer Softwareentwicklungsumgebung kann die Implementierung der mechatronischen Objekte bspw. in einer objektorientierten Programmiersprache erfolgen (z.B. C++) und zunächst eine Basisklasse "MO" definiert werden, die die Grundkonzepte der mechatronischen Objekte realisiert und eine standardisierte Schnittstelle bereitstellt. Eine solche Klasse kann z.B. generische Facetten und bereits Standardfacetten definieren und generische Zugriffsmethoden auf beliebige Facetten enthalten. Für beliebige Typen einer technischen Komponente einer technischen Anlage können dann weitere Klassen von dieser Basisklasse abgeleitet und ggf. um weitere Facetten erweitert und Informationen hinzugefügt werden. Für TEGs kann zunächst eine Klasse "TEG" definiert werden, die die allgemeinen Eigenschaften und Facetten aller TEGs umfasst. Für einen speziellen TEG-Typ x wird dann eine Klasse "TEG_x" von der Klasse "TEG" abgeleitet und mit den spezifischen Eigenschaften und ggf. Facetten dieses TEG-Typs erweitert oder gefüllt. In dem zugehörigen Engineeringsystem wird in einem Anlagenprojekt schliesslich diese Klasse "TEG_x" instanziiert, wenn ein TEG dieses Typs in dem Anlagenprojekt platziert wird, und ggf. parametriert (z.B. mit Ortskennzeichen, Anlagenkennzeichen, notwendiger Zuverlässigkeit). Die Relationen zwischen den Instanzen oder Objekten werden über Zeiger zwischen den Objekten oder über Verweise auf eindeutige Identitäten realisiert.

Zur Datenablage der Objekte und Relationen oder zum Datenaustausch können Framework-Formate und spezifische Formate verwendet werden. Ein Framework-Format ist eine Integrationsbasis für unterschiedliche Domänen und Disziplinen und ist geeignet zur Integration spezifischer Formate. Ein spezifisches Format umfasst Informationen und Beziehungen einer spezifischen Domäne bzw. Disziplin. Als Datenformat für ein Framework-Format kann z.B. benutzt werden: PLM XML, AutomationML, CAEX, STEP etc. Als Datenformat für ein spezifisches Format kann z.B. benutzt werden: JT, Collada, PLCopen XML, STEP AP214, AP 210, eClass, ProList.

FIG 5 zeigt eine beispielhafte Einrichtung ES (z.B. Engineeringsystem) zur Durchführung des erfindungsgemäßen Verfahrens. Das Verfahren wird durch Software (C, C++, Java etc.) realisiert und kann durch ein Computerprogramm-Produkt, welches auf einer programmgesteuerten Einrichtung C die Durchführung des Verfahrens veranlasst zur Ausführung gebracht werden. Weiterhin kann die Software auf einem computerlesbaren Medium gespeichert sein (z.B. Floppy Disk, CD, Smart Media Card, USB-Stick), umfassend Anweisungen, welche, wenn sie auf einem geeignetem Computer C ausgeführt werden, den Computer C dazu bringen, das Verfahren auszuführen.

Die Einrichtung ES umfasst einen Bildschirm M zur grafischen Darstellung der mechatronischen Objekte bzw. des Anlagenmodells, Eingabemittel EA (z.B. Maus, Tastatur, Touch-Pen) zur Auswahl und Manipulation der Objekte, Speichermittel DB zur Archivierung erstellter Objekte bzw. Modelle sowie eine Verarbeitungseinheit C. Die Verarbeitungseinheit C kann ein marktüblicher Computer sein (z.B. Laptop, PC) aber auch ein robuster Industrie-PC, der auch für Anwendungen im Shopfloor-Bereich (z.B. in der Werkhalle) geeignet ist. Das Verfahren ist prinzipiell aber auch durch verteilte Rechnerarchitekturen (Cluster, Cloud-Computing) oder webbasiert realisierbar.

Das Engineeringsystem ES kann die oben angeführten Einschränkungen (Materialunverträglichkeit, Geometrie, zeitliches Verhalten, Normen und Richtlinien, Wartbarkeit etc.) in die Berechnungen mit einbeziehen und so einige der zunächst als geeignet erscheinenden Einbauorte für einen thermoelektrischen Generator bereits automatisiert ausschließen. Es bleibt dabei der Ausgestaltung des Engineering-Systems ES überlassen, in welchem Umfang diese Kriterien bereits automatisiert berücksichtigt werden, z.B. durch Parametrierung oder Konfigurierung durch einen Bediener. Eine Parametrierung könnte z.B. domänenspezifisch erfolgen.

Die letzte Entscheidung über den Einbau eines thermoelektrischen Generators wird üblicherweise dem Konstrukteur vorbehalten sein, dem für jeden thermoelektrischen Generator die bestmöglichen Einbauorte angezeigt werden (z.B. bei Auswahl eines thermoelektrischen Generators werden analog zu oben die besten Einbauorte grün markiert, weitere mögliche Einbauorte "gelb" usw.).

Möglich ist aber auch eine im Engineeringsystem ES umgesetzte Optimierungsstrategie, die die Vor- und Nachteile des Einsatzes eines thermoelektrischen Generators an den möglichen Energiespender-MOs anhand technischer Kriterien wie oben angegeben und anhand erwarteter Lifecycle-Kosten bewertet und automatisch eine vollständige Lösung erstellt (die dann gegebenenfalls wiederum durch einen Konstrukteur modifiziert werden kann).

Als Erweiterung kann das Engineeringsystem ES zusätzlich eine Option anbieten: Falls keine oder nicht ausreichend thermische Energie für in die Lösung bereits eingeplante / platzierte thermoelektrische Generatoren verfügbar ist, kann dies durch eine Veränderung von Lösungsparametern erreicht werden, d.h. Zuführung von zusätzlicher Energie in den Prozess, um später diese Energie an geeigneter Stelle für thermoelektrische Generatoren nutzen zu können. Das Engineeringsystem ES berechnet für diese Option dann automatisch die ausgehend von den MO-TEGs (thermoelektrische Generatoren, die als mechatronische Anlagenobjekte modelliert sind) benötigte Energie entlang der MO-Energieerzeugerkette. Dies geschieht aus Sicht des MO-TEGs bis hin zu den Energiequellen und akkumuliert die dort benötigte Energie (ggf. inkl. möglicher Energieverluste in der MO-Kette). Das Engineeringsystem ES ist in der Lage mehrere alternative Möglichkeiten zu berechnen und stellt diese Alternativen dem Konstrukteur zur Auswahl dar. Das Engineeringsystem ES berücksichtigt dabei grundsätzlich technische Randbedingungen und verwirft nicht realisierbare Lösungen (z.B. thermische Grenzen im Prozess, die nicht überschritten werden dürfen). Jede neue Lösung des Engineeringsystems ES kann dabei zusätzlich aufgrund von betriebswirtschaftlichen Kriterien und in den mechatronischen Objekten verfügbaren Informationen durch das Engineeringsystem ES bewertet werden und als Entscheidungsgrundlage für den Konstrukteur dienen (z.B. wie hoch sind die vermehrten Energiekosten aufgrund der zusätzlichen Energieeinspeisung). Das Engineeringsystem ES kann dem Konstrukteur zusätzlich Hinweise auf technische Engpässe im System geben, d.h. welches mechatronische Objekt verhindert eine erhöhte Energiezufuhr aufgrund von technischen Grenzwerten. In der höchsten Ausbaustufe kann das Engineeringsystem ES zusätzlich alternative mechatronische Objekte (MO) für diese "Engpass"-MOs vorschlagen und dem Konstrukteur zur Auswahl anbieten. Der Konstrukteur kann dann eine Lösungsalternative annehmen oder die Originallösung beibehalten und entsprechend manuell Änderungen an seiner Lösung im Engineeringsystem ES vornehmen.

Damit wird implizit durch das Engineeringkonzept eine Informationstiefe und -qualität erreicht, die ein Engineering von Komponenten mit der Komplexität von thermoelektrischen Generatoren mit vertretbarem Aufwand und dem Einsatzzweck angemessener Zuverlässigkeit erlaubt. Auf diese Weise werden unmittelbar z.B. die Beachtung von Rahmenbedingungen und die Konsistenz des entstehenden Anlagenkonstrukts sichergestellt. Aufgrund der Vielzahl der dabei entstehenden Beziehungs- und Verknüpfungsinformationen wird gleichzeitig die Beschreibung des Anlagenkonstrukts deutlich vertieft, so dass z.B. die Detaillierung und Optimierung einer Anlagen-Energiebilanz stark vereinfacht wird. Der Konstrukteur hat damit die Möglichkeit Planungsparameter wie die Eingangsleistung so anzupassen, dass der Einsatz von thermoelektrischen Generatoren ermöglicht wird.

Die beschriebenen Erweiterungen eines Engineeringsystems ES können innerhalb bzw. als ein Zusatzmodul für ein Mechatronisches Engineeringsystem oder auch als getrenntes System realisiert werden.

Verfahren und System zur Platzierung von thermoelektrischen Generatoren in technischen Anlagen, wobei ein Anlagenmodell aus interagierenden mechatronischen Objekten, umfassend typspezifische und anlagenspezifische thermodynamische Vor- und Nachbedingungen, erstellt wird und basierend auf einer jeweiligen Thermoenergiedifferenz zwischen den mechatronischen Objekten mögliche Einsatzorte für thermoelektrische Generatoren in der Anlage bestimmt werden.

Bezugszeichen
- A: Anlage
- TP: Teilprozess
- AG: Aggregat
- EP: Energiepotential
- TEG: Thermoelektrischer Generator
- VB: Verbraucher
- SE: Systemeigenschaft
- UB: Umgebungsbedingung
- MO1 - MO7: Mechatronisches Objekt
- ES: Engineeringsystem
- M: Monitor
- C: Computer
- DB: Datenbank
- V: Verbindung
- EM: Eingabemittel

## Patentansprüche

1. Verfahren zur Platzierung von thermoelektrischen Generatoren (TEG) in technischen Anlagen (A), umfassend die folgenden Schritte:
a) Darstellen der technischen Anlage (A) als Anlagenmodell, bestehend aus interagierenden mechatronischen Objekten (MO1 - M07), im Rahmen eines Anlagenengineering, wobei ein mechatronisches Objekt (MO1 - M07) typspezifische thermodynamische Vor- und Nachbedingungen enthält;
b) Ergänzen der mechatronischen Objekte (MO1 - M07) um anlagenspezifische thermodynamischen Bedingungen;
c) Bestimmen von Energieketten aus dem Anlagenengineering, wobei die Energieketten aus hintereinandergeschalteten mechatronischen Objekten (MO1 - M07) bestehen;
d) Bestimmen der Energiebilanz für jedes mechatronische Objekt (MO1 - M07) der Energiekette; und
e) Überprüfung der Energiebilanz der mechatronischen Objekte (MO1 - M07) einer Energiekette auf Erfüllung von notwendigen thermodynamischen Bedingungen zum Einsatz von thermoelektrischen Generatoren (TEG).

2. Verfahren nach Anspruch 1, weiter umfassend folgenden Schritt:
e) automatisches Darstellen von Einsatzorten mit genügend Energiepotenzial für thermoelektrische Generatoren (TEG) im Anlagenmodell durch geeignete Ausgabemittel (M).

3. Verfahren nach Anspruch 1 oder 2, weiter umfassend folgenden Schritt:
f) Modellieren des thermoelektrischen Generators (TEG) als mechatronisches Objekt (MO1 - M07) und Integrieren dieses mechatronischen Objektes im Anlagenmodell.

4. Verfahren nach einem der vorstehenden Ansprüche,
**dadurch gekennzeichnet, dass** beim automatischen Darstellen der Einsatzorte für thermoelektrische Generatoren (TEG) folgende Bedingungen berücksichtigt werden: die Ausfallsicherheit der verwendeten Energiequelle und/oder die Materialunverträglichkeit und/oder die Anlagentopologie und/oder die räumlichen Bedingungen und/oder das zeitliche Verhalten und/oder Normen und/oder Richtlinien und/oder Wartbarkeit und/oder physikalische Eigenschaften des thermoelektrischen Generators (TEG).

5. Verfahren nach Anspruch 3, weiter umfassend folgende Schritte:
g) Berechnen der für den als mechatronisches Objekt (MO1 - M07) modellierten thermoelektrischen Generator (TEG) zur Verfügung stehenden Energie in der Energieerzeugerkette; und h) dediziertes Zuführen von Energie in die Energieerzeugerkette durch im Anlagenmodell modellierte Energiequellen, wenn die, für den als mechatronisches Objekt (MO1 - M07) modellierten thermoelektrischen Generator (TEG), zur Verfügung stehende Energie nicht ausreicht.

6. Verfahren zur Ortsbestimmung von thermoelektrischen Generatoren (TEG) in technischen Anlagen (A), umfassend die folgenden Schritte:
a) Darstellen der technischen Anlage (A) als Anlagenmodell, bestehend aus interagierenden mechatronischen Objekten (MO1 - M07), im Rahmen eines Anlagenengineering, wobei ein mechatronisches Objekt (MO1 - M07) typspezifische thermodynamische Vor- und Nachbedingungen enthält;
b) Ergänzen der mechatronischen Objekte (MO1 - M07) um anlagenspezifische thermodynamische Bedingungen;
c) Bestimmen des jeweiligen Wärmedifferenzbedarfs für die mechatronischen Objekte (MO1 - M07);
d) Bestimmen von Energieketten im Anlagenmodell;
e) Modellierung eines thermoelektrischen Generators als mechatronisches Objekt (M01 - M07), wobei der Wärmedifferenzbedarf des thermoelektrischen Generators (TEG) im mechatronischen Objekt (MO1 - M07) hinterlegt ist;
f) Integrieren des als mechatronisches Objekt (MO1 - M07) modellierten thermoelektrischen Generators (TEG) in einer Energiekette des Anlagenmodells;
g) Berechnen der für den als mechatronisches Objekt (MO1 - MO7) modellierten thermoelektrischen Generator zur Verfügung stehenden Energie in der Energiekette; und
h) dediziertes Zuführen von Energie in die Energiekette durch im Anlagenmodell modellierte Energiequellen, wenn die, für den als mechatronisches Objekt (M01 - M07) modellierten thermoelektrischen Generator (TEG), zur Verfügung stehende Energie nicht ausreicht.

7. Verfahren nach Anspruch 3 oder 6,
**dadurch gekennzeichnet, dass** bei der Integration des als mechatronisches Objekt modellierten thermoelektrischen Generators (TEG) im Anlagenmodell folgende Bedingungen berücksichtigt werden: die Ausfallsicherheit der verwendeten Energiequelle und/oder die Materialunverträglichkeit und/oder die Anlagenentopologie und/oder die räumliche Bedingungen und/oder das zeitliches Verhalten und/oder Normen und/oder Richtlinien und/oder Wartbarkeit und/oder physikalische Eigenschaften des thermoelektrischen Generators (TEG).

8. Verfahren nach einem der vorstehenden Ansprüche,
**dadurch gekennzeichnet, dass** ein mechatronisches Objekt (MO1 - M07) eine technische Komponente einer technischen Anlage (A) repräsentiert und Facetten enthält, wobei einer Facette eine Disziplin zugeordnet ist.

9. Verfahren nach Anspruch 8,
**dadurch gekennzeichnet, dass** folgende Disziplinen zuordenbar sind: Mechanik und/oder Elektrik und/oder Automatisierung und/oder Vertrieb und/oder Kalkulation und/oder Projektleitung und/oder Wartung und/oder Sicherheit und/oder Betriebsführung und/oder Bauingenieurwesen und/oder Engineering.

10. Computerprogramm-Produkt, welches auf einer programmgesteuerten Einrichtung die Durchführung eines Verfahrens nach einem der Ansprüche 1 bis 9 veranlasst.

11. Computerlesbares Medium, umfassend Anweisungen, welche, wenn sie auf einem geeignetem Computer (C) ausgeführt werden, den Computer (C) dazu bringen, das Verfahren gemäß einem der Ansprüche 1 bis 9 auszuführen.

12. Engineeringsystem (ES) zur Modellierung technischer Anlagen, geeignet zur Durchführung eines Verfahrens nach einem der Ansprüche 1 bis 9.
